# EUROPEAN PATENT SPECIFICATION

(11) **EP 2 538 519 B1**
(45) Date of publication and mention of the grant of the patent: **07.12.2022**
(21) Application number: 12004497.9
(22) Date of filing: 14.06.2012
(51) Int. Cl.: H02J 7/00

(54) **Stackable bi-directional multicell battery balancer**
Stapelbarer bidirektionaler Mehrzellen-Batterieausgleicher
Équilibreur de batterie multicellulaire bidirectionnel empilable

(30) Priority: 15.06.2011 US 201161497381 P; 23.09.2011 US 201113242836
(43) Date of publication of application: 26.12.2012
(73) Proprietor: Analog Devices International Unlimited Company, Limerick (IE)
(72) Inventor: Nork, Samuel H., Andover MA 01810 (US); Vitunic, Mark R., Lexington MA 02411 (US)
(74) Representative: Horler, Philip John

(56) References cited:
- WO-A1-2007/145460
- WO-A1-2008/097031
- WO-A1-2010/109956
- US-A1- 2005 269 988
- US-A1- 2011 012 559
- US-B1- 6 373 223

## Description

### TECHNICAL FIELD

This disclosure generally relates to the electrical arts, and more particularly, to concepts and techniques for balancing power sources.

### DESCRIPTION OF RELATED ART

Large, high voltage batteries comprising a plurality of series connected battery cells are commonly used in various applications, including electric vehicles and large industrial battery back-up and grid load leveling applications. Safety and lifetime preservation of the battery packs may require that all cells in the pack be monitored and balanced such that each cell operates in a fixed "state of charge" (SOC) range over the operating life of the battery. If a cell is overcharged, discharged too deeply or rapidly, or simply overheated, it may more readily degrade, catch fire, or even explode.

Since cells are typically not identical, there is a concern of imbalance between the cells. For example, there may be differences in the SOC, cell-discharge rate, impedance, capacity, and temperature characteristics. These differences may exist even if the cells are from the same assembly line. The weak cells (i.e., cells with inherently lower capacity, degraded capacity, or high internal impedance,) may charge and discharge faster than stronger cells. Thus, during a charge, a weak cell may reach a predetermined high voltage faster. Similarly, during a discharge, a weak cell may reach a predetermined low voltage faster. In this regard, the weak cells may be weakened further by relatively long charge and discharge cycles. For cells connected in series, the total useful capacity of the battery (i.e., series of cells) is limited by the weakest cell.

Cell balancing may be performed to equalize the voltage or state of charge on each cell over time to address some of the foregoing concerns. Typically, cell balancing is performed using either passive or active balancing.

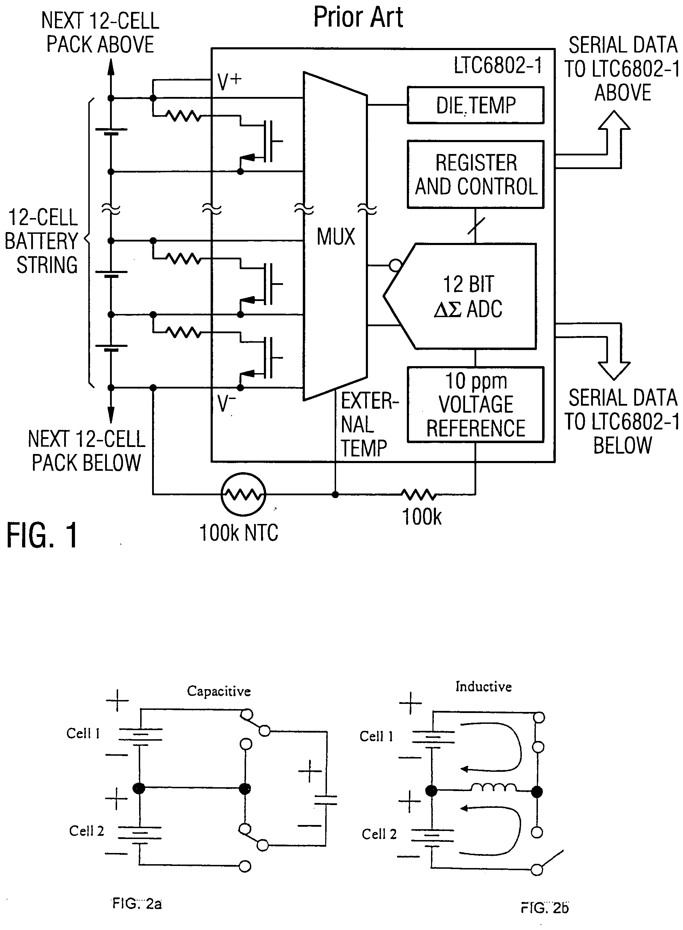

Fig. 1 illustrates a prior art circuit with passive balancing. In passive balancing, the cell that may need balancing (i.e., a cell at a higher SOC than the average cell) is discharged such that it conforms to the charge of other cells. However, discharged energy is dissipated as heat. Accordingly, passive balancing is an energy wasteful approach, especially when cell voltages are significantly different from each other.

In active balancing, each cell voltage (e.g., its SOC) may be measured separately. Capacitive or inductive charge transfer may be used to balance the charge in each cell (instead of dissipating the charge as heat). Power efficiency is thereby increased. In this regard, FIGS. 2a and 2b illustrate prior art circuits with capacitive and inductive charge shuttling active balancing, respectively. Neither circuits of FIGS. 2a and 2b are stackable or interleaved.

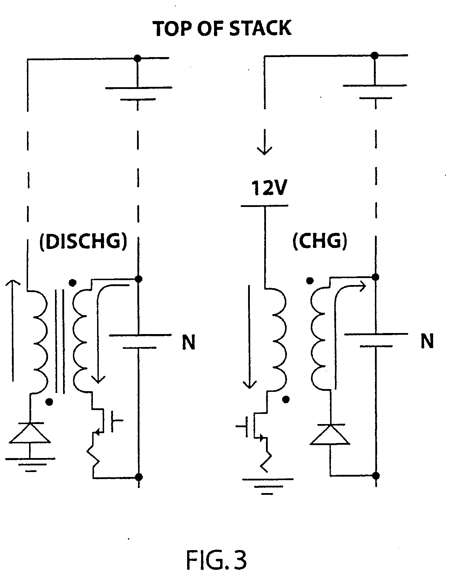

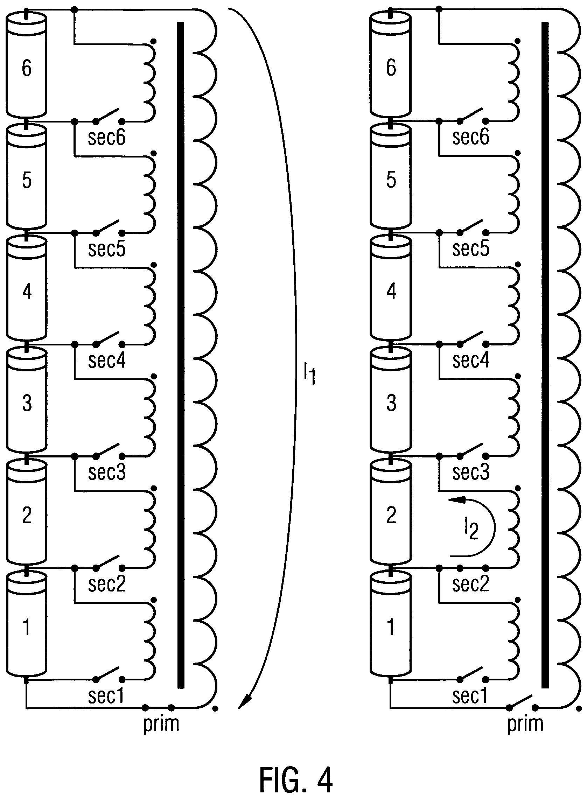

Further, active balancing systems may be unidirectional. In the prior art unidirectional systems of FIG. 3, charge from a particular cell can be either added or withdrawn, but not both, making them less effective in balancing. Further, active balancing systems of the prior art don't allow balancing of several cells simultaneously, making them less time efficient. In this regard, FIG. 4 illustrates a non-stackable, non-simultaneous bi-directional balancing consistent with a typical prior art approach.

Thus, prior art approaches typically include limitations of zero capacity recovery, high balancing power dissipation, long balancing times, and non-optimal energy recovery. Further, there may be isolated I/O control requirements for large strings of series connected cells.

US 2011/313613 A1, which corresponds to WO 2010/109956 A1, discloses an electric storage device including a state detection unit managing and controlling the state of a battery unit, wherein the state detection unit captures an inter-terminal voltage of each of a plurality of batteries measured by a battery management unit in a no-load state where the battery unit is separated from a load, and calculates variation information about the states of charge of the batteries. In addition, the state detection unit, taking into consideration the variation information about the states of charge of the batteries, calculates allowable charge and discharge information required for controlling the charging and discharging of the battery unit in a loaded state where the battery unit is connected to a load and charged or discharged, and outputs the allowable charge and discharge information to a charge and discharge device in the battery unit.

WO 2007/145460 A1 discloses a charge equalization apparatus, in which series-connected battery cells are connected in parallel with the primary windings of transformers. Switches for controlling the flow of current of the primary windings are connected in series with the primary windings, and multiple secondary windings corresponding to the primary windings are connected in parallel with each other.

US 2011/012559 A1 discloses a circuit arrangement for transferring electrical charge between accumulators of an accumulator arrangement. The circuit arrangement includes a number of first series circuits, each connecting in parallel to one of the accumulators, and each comprising a switching element and an inductive storage element connected in series to the load path of the switching element. The circuit arrangement also includes a further series circuit connected in parallel to the accumulator arrangement and comprising a further switching element having a load path and a control terminal, and a further inductive element connected in series to the load path, the further inductive element being inductively coupled to the inductive elements of the first series circuits. The circuit arrangement also includes a control circuit comprising a number of first control outputs connected to the control terminals of the switching elements of the first series circuits, and a further control output connected to the control terminal of the further switching element.

US 2005/269988 A1 discloses an energy storage module including a number of cells coupled in series between two end terminals, and intermediate terminal or terminals providing access to one or more junctions between individual cells of the module. Voltages of the module's cells are balanced by an intra-module voltage balancer. Two or more such modules are connected in series. To balance voltages of the modules, inter-module voltage balancers are used. In one embodiment, an inter-module voltage balancer is connected to a junction of two modules and to intermediate terminals of the two modules. The inter-module balancer attempts to balance voltages of one or more cells of one of the two modules against one or more cells of the other module. Through operation of the intra-module balancers of each module, voltages of both modules are balanced.

US 6 373 223 describes a voltage equalizing apparatus for battery devices, wherein each of a plurality of closed circuits is constituted of each of a plurality of battery devices interconnected in series on a secondary side, each of a plurality of secondary windings magnetically coupled with each other, and each of a plurality of switching devices on the secondary side. A closed circuit is constituted of a battery device on a primary side, a primary winding magnetically coupled with the secondary windings in common, and a switching device on the primary side. The plurality of switching devices on the secondary side and the switching device on the primary side are alternately switched on and off, thereby equalizing the output voltages of the plurality of battery devices interconnected in series on the secondary side.

WO 2008/097031 describes a charge equalization apparatus, in which series-connected batteries are divided into modules having certain sizes, and intra-module charge equalization and inter-module charge equalization are simultaneously performed, thus improving charge equalization performance and reducing the circuit size.

In view of the foregoing, it would be desirable to have a method and system for a time and energy efficient bidirectional balancing of cells connected in series. It would also be desirable to be able to stack several groups of cells together while still being able to address them through a single serial port.

Thus, according to an aspect, it is a problem of the present invention to provide a battery balancing system for balancing cells more effectively. This problem is solved by the features of the appended independent claims. Preferred embodiments are subject of the appended dependent claims.

### BRIEF DESCRIPTION OF DRAWINGS

The drawings are of illustrative examples. Details that may be apparent or unnecessary may be omitted to save space or for more effective illustration When the same numeral appears in different drawings, it refers to the same or like components or steps.
FIG. 1 illustrates a prior art circuit with passive balancing.
FIG. 2a Illustrates a prior art circuit with non-stackable, non-interleaved capacitive charge shuttling active balancing.
FIG. 2b Illustrates a prior art circuit with non-stackable, non-interleaved inductive charge shuttling active balancing.
FIG. 3 Illustrates two prior art circuits with unidirectional isolated flyback balancing.
FIG. 4 Illustrates a prior art circuit with non-simultaneous bi-directional balancing.
FIG. 5 Illustrates a circuit with a 6-cell bi-directional balancer consistent with an embodiment of the invention.
FIG. 6 Illustrates a circuit with transformer connections for balancing a plurality of interleaved battery stacks, consistent with an embodiment of the invention.
FIG. 7 is a system diagram illustrating stackable serial communication, consistent with an embodiment of the invention.

### DETAILED DESCRIPTION OF ILLUSTRATIVE EMBODIMENTS

Illustrative embodiments are now described. Details that may be apparent or unnecessary may be omitted to save space or for a more effective presentation.

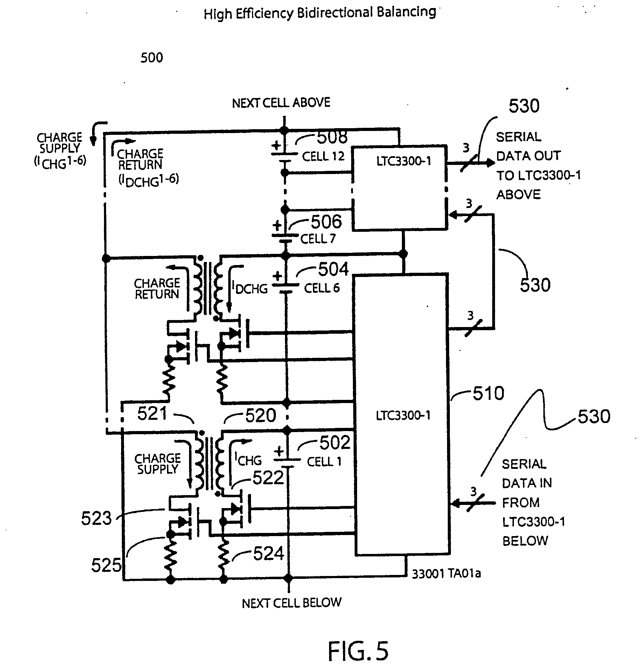

FIG. 5 Illustrates a circuit with transformer connections for balancing a plurality of battery stacks, consistent with an embodiment of the invention. A plurality of cells (i.e., 502 to 508) are stacked on top of one-another in series. The balancing module 510 comprises a plurality of bi-directional cell balancers. For example, the balancing module may comprise six such cell balancers. Each balancer uses a predetermined transformer ratio to transfer charge between a cell and an adjacent sub-stack (in either direction). For example, the transformer ratio can be simply 1:1.

The bi-directional balancing of circuit 500 can provide power efficient cell to sub-stack and sub-stack to cell charge transfer regardless of whether the battery pack is being charged or discharged. Further, each cell within a sub-stack (e.g., cells 1 to 6) is balanced simultaneously. Simultaneous operation reduces balancing time. Indeed, during the time it may take to balance a single cell, a plurality of cells within a sub-stack can be balanced. In one embodiment, simultaneous balancing can occur with other sub-stacks (e.g., cells 6 to 12) as well.

In one embodiment, the first terminal of the primary side of a transformer (e.g., 520) of each cell is connected directly across the cell to be balanced (e.g., 502). The second terminal of the primary side of a transformer is in series with a transistor (e.g., a power FET 522) and a current sense resistor (e.g., 524). The secondary side of each transformer (e.g., 521) is connected to an adjacent cell. For example, the adjacent cell is further up in the stack in series with a transistor (e.g., a power FET 523) and secondary side current sense resistor (e.g., 525)). The current sense resistor (e.g., 525) of each secondary side transformer winding (e.g., 521) is referenced to the lowest voltage cell in the sub-stack. The maximum voltage connection on the secondary side may be limited only by the breakdown voltage of the secondary side transistor 523.

Further, the ON/OFF state and charge current direction control may be independent for each balancer. The state and direction may be communicated to each IC through a common stackable serial port 530. A daisy chained stackable interface allows all balancers to be controlled through a single I/O port 530 without restriction on the number of cells in a series connected battery stack. This feature is discussed in more detail later.

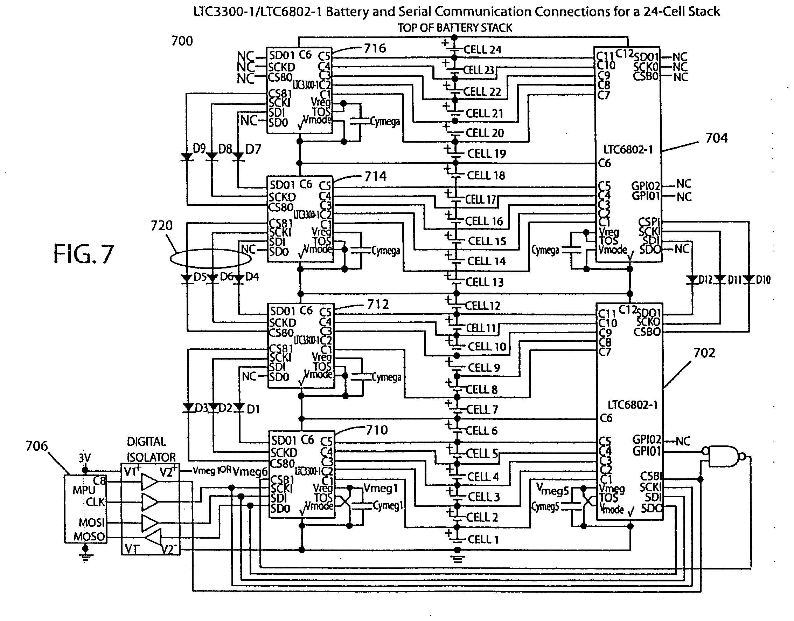

FIG. 7 is a simplified system diagram illustrating stackable serial communication, consistent with an embodiment of the invention. In order to determine charge transfer requirements, at least one monitor module (e.g., 702 and 704) in connection with a microprocessor 706, may first determine the average SOC for each cell corresponding to each sub-stack (i.e., 710 to 716). For example, the voltage of a cell may provide a measure of the SOC of the cell. If all cells have similar capacity, the cell with the lowest SOC (i.e., weakest cell) may receive additional charge from its sub-stack as a one time correction. For example, the entire sub-stack may be used to provide charge to the weaker cell within its sub-stack. Thereafter, the entire sub-stack may cycle normally without any additional adjustments.

However, if a cell has a capacity different from normal cells (e.g., is damaged or degraded), this cell may be charged at a different rate than the normal cells. That is because a cell with less capacity charges faster than a normal cell (reaching a higher voltage faster and a lower voltage faster than a normal cell). For example, with balancing, during a charging cycle of a sub-stack, the weaker cell may receive less charge than the normal cells, thereby allowing all cells within a sub-stack to achieve the same voltage at the end of the charge cycle.

In one embodiment, to preserve battery life, a cell may be considered sufficiently charged at 70% capacity and sufficiently discharged at 30% capacity. Accordingly, during a charge cycle the normal cells and the defective cell of a sub-stack would be charged to 70% capacity at the same time. Similarly, during a discharge cycle, the normal cells and the defective cell would discharge to 30% at the same time.

As discussed above, monitor modules 702 and 704 monitor the SOC of each cell. Each balancer in the system (i.e., 710 to 716) may be controlled by a microprocessor 706 using a single stackable communication interface 720. This daisy chained stackable interface allows balancers 710 to 716 to be controlled through a single communication port (I/O interface 720), irrespective of the number of cells in a series connected battery stack. Accordingly, a theoretically unlimited number of cells may be supported from a single communication port without the need for additional digital isolators.

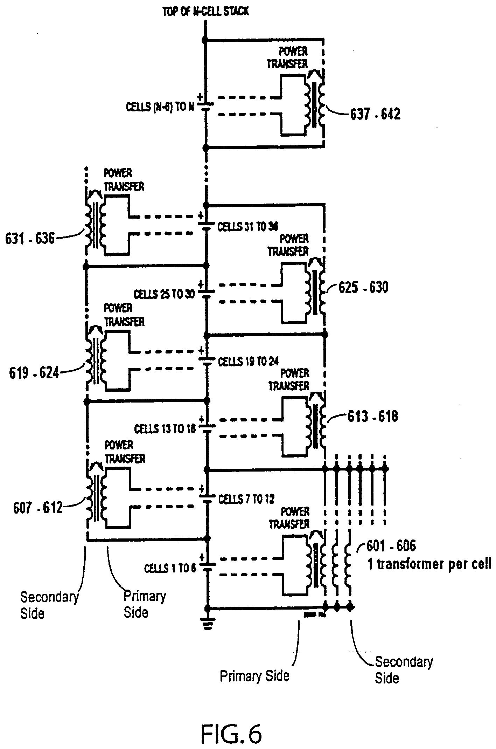

FIG. 6 Illustrates a circuit with transformer connections for balancing a plurality of battery sub-stacks, consistent with an embodiment of the invention. Each sub-stack of cells (e.g., cells 1 to 6) is connected in series with an adjacent sub-stack (e.g., cells 7 to 12). Each cell within a sub-stack has a corresponding primary side of a transformer associated with it. By way of example, the primary side connections for transformers 601 to 606 are across each of the six cells in the lowest voltage sub-stack, wherein the primary side of transformer 601 is across cell 1, the primary side of transformer 602 is across cell 2, etc. Further, each corresponding secondary side of the transformer connection is across the same sub-stack (i.e., cells 1 - 6) plus the adjacent higher voltage sub-stack (i.e., cells 7 - 12) in an interleaved configuration.

Accordingly, in this example, cells 7 to 12 are each associated with transformers 607 - 612. The coils of the secondary side of transformers 607 - 612 are associated with cells 7 to 12 and cells 13 to 18. In this example, assuming the average SOC of cells 25 to 30 is strong while the average SOC of cells 7 to 12 is weak, charge from cells 25 to 30 (i.e., strong sub-stack) can be transferred to cells 7 to 12 (i.e., weak sub-stack) by the following steps:
1. Charge cells 19 to 24: The secondary side of transformers 619 - 624 transfers charge from the strong sub-stack to cells 19 to 24 (i.e., first intermediary sub-stack) via its primary coils.
2. Charge cells 13 to 18: The secondary side of transformers 613 - 618 transfers charge from the first intermediary sub-stack to cells 13 to 18 (i.e., second intermediary sub-stack).
3. Charge cells 7 to 12: The secondary side of transformers 607 - 612 transfers charge from the second intermediary sub-stack to the weak sub-stack.

Accordingly, by the primary side of the transformer straddling cells within each sub-stack and the secondary side straddling a plurality (e.g., 2) of sub-stacks in an interleaved manner, any sub-stack can share the charge of another sub-stack, even if the other sub-stack is not adjacent to the weak (or strong) sub-stack.

As to interleaving sub-stacks, examples provided herein illustrate secondary sides of transformers reaching across two sub-stacks. Those skilled in the art will appreciate, in view of the specification, that the secondary sides of transformers can reach across as many adjacent sub-stacks as desired. For example, reaching across several sub-stacks may improve charge redistribution on a per balancer basis. In this regard, charge return current from a discharging cell is redistributed to a greater number of secondary side cells. Similarly, charge supply current for a cell being charged is sourced from a greater number of adjacent cells. Accordingly, the "discharging" of the secondary side sub-stacks is minimized. Thus, the other cells are impacted as little as possible when a particular cell is balanced. In one example, this is achieved by increasing the number of secondary side cells. Further, although six cells have been illustrated per sub-stack, the number of cells can be any number N, where N is ≥ 2.

The same concept described above in connection with balancing a plurality of sub-stacks can be applied to balancing the cells within a single sub-stack. By way of example, assuming that cell 1 (502) in FIG. 5 is a weak cell in the sub-stack comprising cells 1 to 6, normal cells 2 to 6 can provide part of their charge to weak cell 1 through their respective transformers.

Charge transfer is accomplished by alternately turning the power switches (e.g., 522, 523) connected to the transformer primary and secondary sides ON and OFF. This allows current to ramp up in one winding of the transformer (charge supply side) when its associated series power switch is ON, and then ramp down in the other winding (charge return side) when the charge supply side switch is turned OFF due to the stored energy in the transformer core. At this point, the power switch on the charge return side of the transformer (connected either to a cell or to a sub-stack) is turned ON to provide a low impedance path for the return current to flow. Return current may also conduct through the body diode of the return side power switch. Thus, current flows even if the return side switch is not turned ON. This cycle repeats as needed until sufficient charge has been transferred as determined by the monitoring system.

Cycle by cycle charge transfer control for each balancer is accomplished by directly sensing the transformer winding current through a series sense resistor (e.g. 524, 525). The charge supply side power switch is turned OFF as soon as the current ramping through the sense resistor reaches a predetermined peak voltage (i.e., the current flowing through the charge supply side transformer winding, power switch and sense resistor reaches a predetermined max value). Charge return side current is allowed to flow until the return side current has decayed to zero (as may be indicated by zero voltage drop across the return side sense resistor), and then the cycle may repeat. Alternatively, current may be allowed to flow through the supply side power switch for a pre-determined amount of time. The peak current in this instance would be determined by the supply side ON time and the supply side winding inductance. As before, the return side current could be allowed to flow until it decayed to zero or for a pre-determined amount of time sufficient to allow the current to decay to zero.

Although a single defective cell is discussed in the examples above, those skilled in the art will realize, in view of the disclosure, that the same concepts disclosed herein can be applied to a plurality of defective cells in the same sub-stack.

## Claims

1. A battery balancing system (500) comprising:
a plurality of serially connected sub-stacks of cells, each sub-stack comprising a plurality of cells (502, 504) connected in series;
a balancing module (510) for each sub-stack, the balancing module (510) comprising an independent bidirectional balancer (710) for each cell (502, 504) in the sub-stack;
a plurality of transformers (601-642), each having a primary side (520) and a secondary side (521), and each (601-642) comprising on the primary side (520) a separate coil for each of the plurality of cells (502, 504), and on the secondary side (521) a single coil corresponding to multiple adjacent sub-stacks, the primary side (520) of each transformer (601-642) being connected to its respective cell in its sub-stack and the secondary side (521) to its sub-stack and an adjacent sub-stack, the connection of each transformer (601-642) to its respective adjacent sub-stack being interleaved;
a monitor module (702) configured to sense a state of charge - SOC-of each cell (502, 504) in each sub-stack;
a microprocessor (706) configured to determine an average SOC of the cells (502, 504) for each sub-stack; and
a daisy chained stackable serial port (530) configured to transmit information to the balancing module (510),
wherein the balancing system (500) is configured to transfer charge between a sub-stack of a first transformer of the plurality of transformers and a sub-stack of a second transformer of the plurality of transformers that is adjacent to the first transformer, and thereby:
provide an additional charge to any weak cell in a sub-stack and simultaneously remove additional charge from any strong cell within the sub-stack during a discharging of the battery, and
remove additional charge from any weak cell in a sub-stack and simultaneously provide an additional charge to any strong cell in the sub-stack during a charging of the battery,
wherein each cell within a sub-stack is balanced simultaneously,
wherein the balancing system (500) further comprises:
each coil of the transformers (601 - 642) including a first terminal and a second terminal,
wherein each coil on the primary side (520) has a transistor (522) and a resistor (524) in series with the coil on the primary side (520);
wherein each coil on the secondary side (521) has a transistor (523) and a resistor (525) in series with the coil on the secondary side (521);
wherein the first terminal of each coil on the primary side (520) of each transformer (601-642) is connected to a cell (502, 504);
wherein the first terminal of the coil on the secondary side (521) of each transformer (601-642) is connected to a first terminal of a secondary side of a transformer of an adjacent independent bidirectional balancer (710); and
wherein the resistor (525) in series with a second terminal of the secondary side of each transistor is connected to the lowest voltage of its sub-stack.

2. The battery balancing system (500) of claim 1, wherein any number of sub-stacks can be stacked in series and controlled using a common stackable serial control.

3. The battery balancing system (500) of claim 1 or 2, wherein each sub-stack comprises six series connected cells.

4. The battery balancing system (500) of any one of the preceding claims, wherein every strong or weak sub-stack is balanced simultaneously.

5. The battery balancing system (500) of any one of the preceding claims, wherein any number of sub-stacks are balanced simultaneously.

6. The battery balancing system (500) of claim 1, wherein a maximum voltage across the secondary side of each coil is limited by a breakdown voltage of its respective series transistor.

7. The battery balancing system (500) of any one of the preceding claims, wherein the balancing module (510) is configured to allow each cell (502, 504) within a sub-stack to achieve a same voltage at a first predetermined point in a charge cycle and at a second predetermined point in a discharge cycle.

8. The battery balancing system (500) of claim 7, wherein:
the first predetermined point is at 70% capacity of the cells (502, 504) within the sub-stack; and
the second predetermined point is at 30% capacity of the cells (502, 504) within the sub-stack.

9. A method of balancing a battery for the battery balancing system according to claim 1, the method comprising:
sensing an SOC of each cell (502, 504) in every sub-stack;
calculating an average SOC for every sub-stack;
determining a strength of each cell (502, 504) in every sub-stack in relation to the average SOC in every sub-stack;
providing an additional charge to any weak cell in a sub-stack while simultaneously removing an additional charge from any strong cell in the sub-stack during a discharging of the battery; and
removing an additional charge from any weak cell in a sub-stack while simultaneously adding an additional charge to any strong cell in the sub-stack during a charging of the battery,
wherein each cell within a sub-stack is balanced simultaneously.

10. The method of claim 9 further comprising:
transferring charge between one sub-stack to another sub-stack of the battery through at least one intermediary sub-stack in an interleaved manner.

11. The method of claim 9 or 10 further comprising allowing each cell (502, 504) within a sub-stack to achieve a same voltage at a first predetermined point in a charge cycle and at a second predetermined point in a discharge cycle.

12. The method of claim 11, wherein:
the first predetermined point is at 70% capacity of the cells (502, 504) within the sub-stack; and
the second predetermined point is at 30% capacity of the cells (502, 504) within the sub-stack.

## Patentansprüche

1. Batterieausgleichssystem (500), das Folgendes umfasst:
mehrere in Reihe geschaltete Teilstapel von Zellen, wobei jeder Teilstapel mehrere Zellen (502, 504) umfasst, die in Reihe geschaltet sind;
ein Ausgleichsmodul (510) für jeden Teilstapel, wobei das Ausgleichsmodul (510) ein unabhängiges bidirektionales Ausgleichselement (710) für jede Zelle (502, 504) im Teilstapel umfasst;
mehrere Transformatoren (601-642), wovon jeder eine Primärseite (520) und eine Sekundärseite (521) hat und wovon jeder (601-642) auf der Primärseite (520) eine getrennte Spule für jede der mehreren Zellen (502, 504) und auf der Sekundärseite (521) eine einzelne Spule, die mehreren aneinander angrenzenden Teilstapeln entspricht, umfasst, wobei die Primärseite (520) jedes Transformators (601-642) mit der jeweiligen Zelle im Teilstapel und die Sekundärseite (521) mit dem Teilstapel und einem angrenzenden Teilstapel verbunden ist, wobei die Verbindung des jeweiligen Transformators (601-642) mit dem jeweiligen angrenzenden Teilstapel verschachtelt angeordnet ist;
ein Überwachungsmodul (702), das konfiguriert ist, einen Ladezustand - SOC - jeder Zelle (502, 504) in jedem Teilstapel zu erfassen;
einen Mikroprozessor (706), der konfiguriert ist, einen gemittelten Ladezustand der Zellen (502, 504) für jeden Teilstapel zu ermitteln; und
einen in Reihe geschalteten stapelbaren seriellen Anschluss (530), der konfiguriert ist, Informationen an das Ausgleichsmodul (510) zu übertragen,
wobei das Ausgleichssystem (500) konfiguriert ist, Ladung zwischen einem Teilstapel eines ersten Transformators der mehreren Transformatoren und einem Teil stapel eines zweiten Transformators der mehreren Transformatoren, der an den ersten Transformator angrenzt, zu übertragen, und um dadurch:
zusätzliche Ladung für eine schwache Zelle in einem Teilstapel bereitzustellen und gleichzeitig zusätzliche Ladung von einer starken Zelle in dem Teilstapel während des Entladens der Batterie zu entfernen, und
zusätzliche Ladung von einer schwachen Zelle in einem Teilstapel zu entfernen und gleichzeitig zusätzliche Ladung für eine starke Zelle im Teilstapel während des Ladens der Batterie bereitzustellen,
wobei jede Zelle in einem Teilstapel gleichzeitig ausgeglichen wird,
wobei das Ausgleichssystem (500) ferner Folgendes umfasst:
alle Spulen der Transformatoren (601-642), die einen ersten Anschluss und einen zweiten Anschluss aufweisen,
wobei jede Spule auf der Primärseite (520) einen Transistor (522) und einen Widerstand (524) in Reihe mit der Spule auf der Primärseite (520) hat;
wobei jede Spule auf der Sekundärseite (521) einen Transistor (523) und einen Widerstand (525) in Reihe mit der Spule auf der Sekundärseite (521) hat;
wobei der erste Anschluss jeder Spule auf der Primärseite (520) jedes Transformators (601-642) mit einer Zelle (502, 504) verbunden ist;
wobei der erste Anschluss der Spule auf der Sekundärseite (521) jedes Transformators (601-642) mit einem ersten Anschluss auf einer Sekundärseite eines Transformators eines angrenzenden unabhängigen bidirektionalen Ausgleichselements (710) verbunden ist; und
wobei der Widerstand (525) in Reihe mit einem zweiten Anschluss der Sekundärseite des jeweiligen Transistors mit der niedrigsten Spannung seines Teilstapels verbunden ist.

2. Batterieausgleichssystem (500) nach Anspruch 1, wobei eine beliebige Anzahl von Teilstapeln unter Verwendung einer gemeinsamen stapelbaren seriellen Steuerung in Reihe gestapelt und gesteuert werden kann.

3. Batterieausgleichssystem (500) nach Anspruch 1 oder 2, wobei jeder Teilstapel sechs in Reihe geschaltete Zellen umfasst.

4. Batterieausgleichssystem (500) nach einem der vorhergehenden Ansprüche, wobei jeder starke oder schwache Teilstapel gleichzeitig ausgeglichen wird.

5. Batterieausgleichssystem (500) nach einem der vorhergehenden Ansprüche, wobei eine beliebige Anzahl an Teilstapeln gleichzeitig ausgeglichen wird.

6. Batterieausgleichssystem (500) nach Anspruch 1, wobei eine maximale Spannung über der Sekundärseite jeder Spule durch eine Durchbruchspannung des entsprechenden in Reihe geschalteten Transistors begrenzt ist.

7. Batterieausgleichssystem (500) nach einem der vorhergehenden Ansprüche, wobei das Ausgleichsmodul (510) so konfiguriert ist, dass jede Zelle (502, 504) in einem Teilstapel die gleiche Spannung zu einem ersten festgelegten Punkt in einem Ladezyklus und zu einem zweiten festgelegten Punkt in einem Entladezyklus erreichen kann.

8. Batterieausgleichssystem (500) nach Anspruch 7, wobei:
der erste festgelegte Punkt bei 70 % Kapazität der Zellen (502, 504) im Teilstapel liegt; und
der zweite festgelegte Punkt bei 30 % Kapazität der Zellen (502, 504) im Teilstapel liegt.

9. Verfahren zum Ausgleichen einer Batterie für das Batterieausgleichssystem nach Anspruch 1, wobei das Verfahren die folgenden Schritte umfasst:
Erfassen eines Ladezustands jeder Zelle (502, 504) in jedem Teilstapel;
Berechnen eines gemittelten Ladezustands für jeden Teilstapel;
Ermitteln einer Stärke jeder Zelle (502, 504) in jedem Teilstapel in Bezug auf den gemittelten Ladezustand in jedem Teil stapel;
Bereitstellen einer zusätzlichen Ladung für eine schwache Zelle in einem Teilstapel, wobei gleichzeitig eine zusätzliche Ladung von einer starken Zelle im Teilstapel während des Entladens der Batterie entfernt wird; und
Entfernen einer zusätzlichen Ladung von einer schwachen Zelle in einem Teilstapel, wobei gleichzeitig eine zusätzliche Ladung zu einer starken Zelle im Teilstapel während des Ladens der Batterie hinzugefügt wird,
wobei jede Zelle in einem Teilstapel gleichzeitig ausgeglichen wird.

10. Verfahren nach Anspruch 9, das ferner den folgenden Schritt umfasst:
Übertragen von Ladung von einem Teilstapel zu einem anderen Teilstapel der Batterie durch wenigstens einen verschachtelt angeordneten dazwischenliegenden Teilstapel.

11. Verfahren nach Anspruch 9 oder 10, das ferner umfasst, dass jede Zelle (502, 504) in einem Teilstapel die gleiche Spannung zu einem ersten festgelegten Punkt in einem Ladezyklus und einem zweiten festgelegten Punkt in einem Entladezyklus erreichen kann.

12. Verfahren nach Anspruch 11, wobei:
der erste festgelegte Punkt bei 70 % Kapazität der Zellen (502, 504) im Teilstapel liegt; und
der zweite festgelegte Punkt bei 30 % Kapazität der Zellen (502, 504) im Teilstapel liegt.

## Revendications

1. Système d'équilibrage de batterie (500) comprenant :
une pluralité de sous-empilements de cellules connectés en série, chaque sous-empilement comprenant une pluralité de cellules (502, 504) connectées en série ;
un module d'équilibrage (510) pour chaque sous-empilement, le module d'équilibrage (510) comprenant un équilibreur bidirectionnel indépendant (710) pour chaque cellule (502, 504) dans le sous-empilement ;
une pluralité de transformateurs (601-642), chacun ayant un côté primaire (520) et un côté secondaire (521), et chacun (601-642) comprenant sur le côté primaire (520) une bobine séparée pour chacune de la pluralité de cellules (502, 504), et sur le côté secondaire (521), une bobine unique correspondant à de multiples sous-empilements adjacents, le côté primaire (520) de chaque transformateur (601-642) étant connecté à sa cellule respective dans son sous-empilement et le côté secondaire (521) à son sous-empilement et à un sous-empilement adjacent, la connexion de chaque transformateur (601-642) à son sous-empilement adjacent respectif étant entrelacée ;
un module de surveillance (702) configuré pour détecter un état de charge - SOC - de chaque cellule (502, 504) dans chaque sous-empilement ;
un microprocesseur (706) configuré pour déterminer un SOC moyen des cellules (502, 504) pour chaque sous-empilement ; et
un port série empilable en guirlande (530) configuré pour transmettre des informations au module d'équilibrage (510),
dans lequel le système d'équilibrage (500) est configuré pour transférer une charge entre un sous-empilement d'un premier transformateur de la pluralité de transformateurs et un sous-empilement d'un second transformateur de la pluralité de transformateurs qui est adjacent au premier transformateur, et ainsi pour :
fournir une charge supplémentaire à toute cellule faible dans un sous-empilement et retirer simultanément une charge supplémentaire depuis toute cellule forte au sein du sous-empilement pendant une décharge de la batterie, et
retirer une charge supplémentaire depuis toute cellule faible dans un sous-empilement et fournir simultanément une charge supplémentaire à toute cellule forte dans le sous-empilement pendant une charge de la batterie,
dans lequel chaque cellule au sein d'un sous-empilement est équilibrée simultanément,
dans lequel le système d'équilibrage (500) comprend en outre :
chaque bobine des transformateurs (601-642) comportant une première borne et une second borne,
dans lequel chaque bobine sur le côté primaire (520) a un transistor (522) et une résistance (524) en série avec la bobine sur le côté primaire (520) ;
dans lequel chaque bobine sur le côté secondaire (521) a un transistor (523) et une résistance (525) en série avec la bobine sur le côté secondaire (521) ;
dans lequel la première borne de chaque bobine sur le côté primaire (520) de chaque transformateur (601-642) est connectée à une cellule (502, 504) ;
dans lequel la première borne de la bobine sur le côté secondaire (521) de chaque transformateur (601-642) est connectée à une première borne d'un côté secondaire d'un transformateur d'un équilibreur bidirectionnel indépendant adjacent (710) ; et
dans lequel la résistance (525) en série avec une seconde borne du côté secondaire de chaque transistor est connectée à la tension la plus basse de son sous-empilement.

2. Système d'équilibrage de batterie (500) selon la revendication 1, dans lequel tout nombre de sous-empilements peut être empilé en série et commandé à l'aide d'une commande série empilable commune.

3. Système d'équilibrage de batterie (500) selon la revendication 1 ou 2, dans lequel chaque sous-empilement comprend six cellules connectées en série.

4. Système d'équilibrage de batterie (500) selon l'une quelconque des revendications précédentes, dans lequel chaque sous-empilement fort ou faible est équilibré simultanément.

5. Système d'équilibrage de batterie (500) selon l'une quelconque des revendications précédentes, dans lequel tout nombre de sous-empilements est équilibré simultanément.

6. Système d'équilibrage de batterie (500) selon la revendication 1, dans lequel une tension maximale aux bornes du côté secondaire de chaque bobine est limitée par une tension de claquage de son transistor série respectif.

7. Système d'équilibrage de batterie (500) selon l'une quelconque des revendications précédentes, dans lequel le module d'équilibrage (510) est configuré pour permettre à chaque cellule (502, 504) au sein d'un sous-empilement d'atteindre une même tension à un premier point prédéterminé dans un cycle de charge et à un second point prédéterminé dans un cycle de décharge.

8. Système d'équilibrage de batterie (500) selon la revendication 7, dans lequel :
le premier point prédéterminé est à 70 % de la capacité des cellules (502, 504) au sein du sous-empilement ; et
le second point prédéterminé est à 30 % de la capacité des cellules (502, 504) au sein du sous-empilement.

9. Procédé d'équilibrage d'une batterie pour le système d'équilibrage de batterie selon la revendication 1, le procédé comprenant les étapes consistant à :
détecter un SOC de chaque cellule (502, 504) dans chaque sous-empilement ;
calculer un SOC moyen pour chaque sous-empilement ;
déterminer une force de chaque cellule (502, 504) dans chaque sous-empilement en référence au SOC moyen dans chaque sous-empilement ;
fournir une charge supplémentaire à toute cellule faible dans un sous-empilement tout en retirant simultanément une charge supplémentaire depuis toute cellule forte dans le sous-empilement pendant une décharge de la batterie ; et
retirer une charge supplémentaire depuis toute cellule faible dans un sous-empilement tout en ajoutant simultanément une charge supplémentaire à toute cellule forte dans le sous-empilement pendant une charge de la batterie,
dans lequel chaque cellule au sein d'un sous-empilement est équilibrée simultanément.

10. Procédé selon la revendication 9 comprenant en outre :
le transfert d'une charge entre un sous-empilement et un autre sous-empilement de la batterie à travers au moins un sous-empilement intermédiaire d'une manière entrelacée.

11. Procédé selon la revendication 9 ou 10 comprenant en outre le fait de permettre à chaque cellule (502, 504) au sein d'un sous-empilement d'atteindre une même tension à un premier point prédéterminé dans un cycle de charge et à un second point prédéterminé dans un cycle de décharge.

12. Procédé selon la revendication 11, dans lequel :
le premier point prédéterminé est à 70 % de la capacité des cellules (502, 504) au sein du sous-empilement ; et
le second point prédéterminé est à 30 % de la capacité des cellules (502, 504) au sein du sous-empilement.
